# EUROPÄISCHE PATENTSCHRIFT

(11) **EP 1 163 999 B1**
(45) Veröffentlichungstag und Bekanntmachung des Hinweises auf die Patenterteilung: **12.10.2005**
(21) Anmeldenummer: 01112422.9
(22) Anmeldetag: 22.05.2001
(51) Int. Cl.: B29C 67/00

(54) **Materialsystem zur Verwendung beim 3D-Drucken**
Material system for use in a 3D printing process
Système de materiaux pour l'utilisation dans un procédé d'impression en trois dimensions

(30) Priorität: 30.05.2000 DE 10026955
(43) Veröffentlichungstag der Anmeldung: 19.12.2001
(73) Patentinhaber: DaimlerChrysler AG, 70567 Stuttgart (DE)
(72) Erfinder: Shen, Jialin, Dr., 89134 Blaustein (DE)

(56) Entgegenhaltungen:
- EP-A- 0 431 924
- WO-A-01/34371
- WO-A-98/51477
- US-A- 5 902 441

## Beschreibung

Die Erfindung betrifft ein Materialsystem zur Verwendung beim 3D-Drucken gemäß dem Patentanspruch 1. Ein Materialsystem gemäß dem Oberbegriff des Patentanspruchs 1 ist bereits aus der WO 9809798-A bekannt.

In der Produktionstechnik und insbesondere im industriellen Modellbau wird die Entwicklung neuartiger schneller Herstellungsmethoden ständig vorangetrieben. Eine Gruppe derartiger schneller Herstellungsverfahren wird als Rapid-Prototyping-Verfahren bezeichnet. Zu dieser Gruppe gehört das dreidimensionale oder 3D-Drucken.

3D-Drucken gemäß der WO 9809798 A ist ein Verfahren, bei dem ein pulverförmiges Materialsystem, bestehend aus Füllmaterial und Binder, schichtweise miteinander verbunden wird. Hierzu wird das Pulver schichtweise aufgetragen und die Pulverschicht wird mit einem Lösungsmittel "bedruckt", welches den Binder aktiviert und somit das Füllmaterial verklebt. So entsteht eine Querschnittsschicht eines Bauteils. Sobald diese fertiggestellt ist, wird eine neue Pulverschicht aufgetragen und neu "bedruckt". Dieser Vorgang wird solange wiederholt, bis das gesamte Bauteil fertiggestellt ist Derartig hergestellte Bauteile besitzen eine geringe Formfestigkeit, welche bei der Nachbehandlung leicht zum Brechen beziehungsweise zum Bauteilverzug führt. Eine weitere Konsequenz der geringen Formfestigkeit ist, daß größere Bauteile unter Umständen nicht in einem Stück gebaut werden können, auch wenn zukünftig Maschinen mit vergrößertem Bauraum zur Verfügung stehen. Größere Bauteile würden aufgrund der geringen Formfestigkeit bereits durch die Belastung ihres Eigengewichtes brechen. Dies gilt insbesondere für Werkstoffe mit höherer Dichte. Aber auch für kleine Teile mit hohen Qualitätsanforderungen, insbesondere mit feinen oder gar filigranen Strukturen, muß die Formfestigkeit erhöht werden.

Die Aufgabe der vorliegenden Erfindung besteht daher darin, ein Materialsystem zur Verwendung beim 3D-Drucken anzugeben, welches eine höhere Formfestigkeit aufweist.

Die Erfindung ist in Bezug auf das zu schaffende Materialsystem durch die Merkmale des Patentanspruchs 1 wiedergegeben. Die weiteren Ansprüche enthalten vorteilhafte Ausgestaltungen und Weiterbildungen des erfindungsgemäßen Materialsystems (Patentansprüche 2 bis 12).

Die Aufgabe wird bezüglich des zu schaffenden Materialsystems zur Verwendung beim 3D-Drucken erfindungsgemäß dadurch gelöst, daß das Materialsystem enthält
eine pulverförmige Komponente aus Binder sowie optional Füllmaterial
und eine flüssige Komponente aus Lösungsmittel,
wobei der Binder in dem Lösungsmittel löslich ist,
   sowie
zwei komplementäre Polyelektrolythen,
   und/oder
einen Initiator für eine Vernetzungsreaktion des Binders.

Der Vorteil eines solchen gemischten Materialsystems besteht in der höheren Bindekraft zwischen den einzelnen Partikeln. Diese hohe Bindekraft resultiert entweder aus den Säure-Base-Verbindungen, die sich zwischen den komplementären Polyelektrolyten ausbilden, oder aus der durch den Initiator initierten zusätzlichen Vernetzung oder aus beiden. Geeignete Initiatoren sind beispielsweise bekannte Photoinitiatoren oder auch thermische Initiatoren, beispielsweise Peroxid. Höhere Bindekraft zwischen den einzelnen Partikeln bedeutet gleichzeitig eine höhere Formfestigkeit des 3D-Druck-Produktes. Dies erlaubt die Herstellung größerer, dünnwandigerer und filigranerer Bauteile, eine höhere Genauigkeit, da aus weniger Nachbearbeitungsbedarf auch weniger Fehler resultieren sowie die Einsetzbarkeit eines erweiterten Werkstoffspektrums.

In einer vorteilhaften Ausführungsform des erfindungsgemäßen Materialsystems sind die zwei komplementären Polyelektrolyten enthalten in zwei Bindern oder in einem Binder und in dem Lösungsmittel. Die jeweilige Säure-Base-Reaktion wird erst bei Kontakt zwischen Binder und Lösungsmittel initiert. Dadurch sind die einzelnen Komponenten des Materialsystems gut lagerbar und handhabbar.

In einer weiteren vorteilhaften Ausführungsform des erfindungsgemäßen Materialsystems ist der Initiator enthalten in dem Lösungsmittel oder in dem oder den Bindern. Dies gewährleistet eine gute und gezielte Verteilung innerhalb des Materialsystems und gleichzeitig eine einfache Aktivierung des Photoinitiators. Die Aktivierung kann durch kurzzeitige Belichtung jeweils einer Materialschicht während des 3D-Druck-Prozesses erfolgen.

In einer anderen vorteilhaften Ausführungsform des erfindungsgemäßen Materialsystems ist das Füllmaterial mit dem Binder beschichtet. Verfahren für eine derartige Beschichtung sind dem Fachmann bekannt. Mit Binder beschichtetes Füllmaterial gewährleistet eine gleichmäßigere Verteilung des Binders als eine einfache Mischung dieser beiden Komponenten und damit eine bessere Formfestigkeit über das gesamte Bauteil.

Vorteilhaft wird ein erstes Füllmaterial mit einem sauren Polyelektrolyten beschichtet und ein zweites Füllmaterial (gleicher oder anderer Art) mit einem komplementären basischen Polyelektrolyten beschichtet. Danach werden beide Sorten gemischt.

Vorteilhaft ist auch ein restaschearmes Materialsystem für Feingußanwendungen.

Dies soll am Beispiel der sogenannten Feingußtechnik verdeutlicht werden. Dort wird zunächst ein positives Urmodell eines Bauteils hergestellt. Aus diesem positiven Urmodell wird durch Abformen mit keramischen Schlicker eine negative Form hergestellt. Für die Herstellung des eigentlichen Bauteils muß das Urmodell aus der Form entfernt werden. Die Entfernung des Urmodells aus der Feingußform mittels des sogenannten 'Flash fire'-Verfahrens, also durch schlagartige Temperaturerhöhung. Dieses Verfahren zeigt für viele Anwendungen der Feingußtechnik zufriedenstellende Ergebnisse. Bei Anwendungen, die sehr enge Kavitäten der Form und hohe Oberflächenqualität des Endproduktes erfordern, treten jedoch Probleme auf. Das Material der Urform wird nicht vollständig aus der Form entfernt. Dies ist auf Restasche zurückzuführen. Die Verwendung eines restaschearmen Materialsystems löst dieses Problem. Restaschearm bedeutet hier weniger als 0,2 Gewichtsprozent bezogen auf das ursprüngliche Gewicht. Die Restasche sollte in Staubform anfallen. Hierzu werden erfindungsgemäß (nahezu) restaschefreie (<< 0,1 Gew.%) Füllmaterialien, Binder und Lösungsmittel (möglichst ohne anorganische Bestandteile) eingesetzt. Eine vollständige Restaschefreiheit des Materialsystems ist nicht immer möglich, da mitunter Zusatzstoffe (z.B. Rieselhilfen) mit anorganischen · Bestandteilen (z.B. Zn- oder Al-Sterat) beigegeben werden müssen, um einen Einsatz des Materialsystems für das 3D-Drucken zu erlauben.

Vorteilhaft ist auch ein Materialsystem, welches in einem Autoklaven fließfähig ist, insbesondere in einem in der Feingußtechnik üblichen Autoklaven.

Eine weitere Methode zur Entfernung des Urmodells aus der Feingußform besteht darin, beides in einen Autoklaven einzubringen und erhöhtem Druck (> 5 bar) und Temperatur (> 150°C) auszusetzen. Geeignete Materialien, z.B. Wachs oder niedermolekulare Polymere, werden unter diesen Bedingungen fließfähig. Das Bedeutet, die Urform wird verflüssigt und kann aus der Keramikform ausfließen. Mitunter ist ein zusätzliches Ausbrennen nötig, um Materialreste aus engen Kavitäten zu entfernen.

Vorteilhaft ist auch ein Materialsystem, bei dem zumindest ein wesentlicher Teil des Füllmaterials und Binders in Form von abgerundeten Partikeln vorliegt.

Dies erlaubt vollständig oder nahezu vollständig auf Rieselhilfen zu verzichten und verringert somit den Restaschegehalt. Darüber hinaus verbessert es die Oberflächenqualität der Bauteile und reduziert die notwendige Beschichtungsdicke. Untersuchungen zeigen, daß die Bauteilgenauigkeit steigt und der Nachbearbeitungsbedarf sinkt.

Besonders vorteilhaft ist ein solches Materialsystem, bei dem die mittleren Partikeldurchmesser kleiner als circa 40 µm sind. Mit einem Materialsystem, bei dem die Partikeldurchmesser kleiner als circa 30 µm sind, lassen sich Bauteile mit Oberflächenrauhigkeiten von Ra <= 6 µm herstellen.

Vorteilhaft ist auch ein Materialsystem, bei dem das Füllmaterial aus Wachs, PS, PMMA oder POM besteht. Diese Materialien weisen eine ausreichend hohe Festigkeit für ein 3D-Druck-Produkt auf, sind nahezu restaschefrei und zeigen gleichzeitig eine gute Eignung für das 'Flashfire' und/oder Autoklav-Verfahren auf. PMMA-Pulver weisen darüber hinaus, bedingt durch ihr Herstellungsverfahren über Polymerisation, nahezu ideal runde Partikeln auf.

Vorteilhaft ist auch ein Materialsystem, bei dem der Binder aus einem wasserlöslichen Polymer besteht, vorzugsweise aus Polyvinylpyrrolidon (PVP). Dabei kann es sich um ein Homo- und/oder Co-Polymer oder sogar um einen Blend handeln. Besonders geeignet sind zwei komplementären Polyelektrolythen, beispielsweise basisches und saures PVP. Ein wasserlöslicher Binder ist aus Umweltgesichtspunkten und hinsichtlich des gesundheitlichen Gefährdungspotentials für das Bedienpersonal solchen Bindern vorzuziehen, die andere Lösungsmittel erfordern. PVP ist wasserlöslich und nahezu restaschefrei.

Vorteilhaft ist auch ein Materialsystem (mit erhöhter Bindekraft und abgerundeten Partikeln), bei dem der Anteil des Binders an dem Materialsystem weniger als circa 10 Gewichtsprozent beträgt. Dadurch wird eine ausreichende Verbindung gewährleistet und gleichzeitig sinkt mit dem Binderanteil das Quellverhalten des Materialsystems. Dies wiederum minimiert die Herstellungsfehler in der Bauteilgeometrie und verbessert die Formbeständigkeit.

Vorteilhaft ist auch ein erfindungsgemäßes Materialsystem mit erhöhter Bindekraft, bei dem das Füllmaterial aus Metall, Keramik oder Karbid besteht. Heute übliche Binder sind nicht in der Lage, derartige Materialien mit hoher Dichte ausreichend fest zu binden, um Belastungen aufgrund des Eigengewichtes zu kompensieren, geschweige denn ausreichende Formfestigkeit zu gewährleisten. Diese Materialien weisen aber eine sehr hohe Festigkeit auf und ergeben zusammen mit dem neuen Binder ein 3D-Druck-Produkt (zum Beispiel Metall-Matrix-Komposit), welches völlig neue Anwendungsfelder erschließt, beispielsweise für Spritzgießwerkzeuge oder Elektroden.

Nachfolgend wird anhand eines Ausführungsbeispiels das erfindungsgemäße Materialsystem näher erläutert:

Das Materialsystem enthält ein PMMA-Copolymer-Pulver als Füllstoff. Das Pulver weist Partikeln mit einem mittleren Durchmesser von circa 35 µm sowie mit abgerundeter Kugelform auf. Dem PMMA-Pulver ist eine Rieselhilfe von 0,05 Gewichtsprozent in Form von anorganischen Zn- oder Al-Sterat beigegeben, welches den Hauptanteil des Restaschegehaltes bedingt.

Das Materialsystem enthält außerdem zwei Binder in Form eines sauren und eines basischen PVP-Polyelektrolythen. Ein Anteil des PMMA-Pulvers ist mit dem sauren Binder beschichtet, der andere Anteil mit dem basischen. Die beschichteten PMMA-Pulver sind miteinander gleichmäßig vermischt. PVP ist nahezu restaschefrei und wasserlöslich. Das Füllmaterial PMMA ist mit dem Binder PVP chemisch kompatibel.

Das Materialsystem enthält als Lösungsmittel Wasser. Wasser ist ungefährlich, umweltunbedenklich und kostengünstig.

Das Materialsystem weist einen Restaschegehalt von weniger als 0,05 Prozent auf.

Während des 3D-Druckprozesses werden die beiden Binder durch das Lösungsmittel Wasser aktiviert und bilden stabile Säure-Base-Bindungen aus, durch welche die einzelnen Partikeln miteinander verbunden werden.

Das erfindungsgemäße Materialsystem erweist sich in der Ausführungsform des vorstehend beschriebenen Beispiels als besonders geeignet für die Anwendung in der Feingußtechnik, da es eine gute Formfestigkeit sowie einen geringen Restaschegehalt aufweist und aufgrund der feinkörnigen und nahezu runden Partikeln eine gute Oberflächenqualität der Produkte ermöglicht.

Des weiteren besitzen das Füllmaterial und die beiden Binder eine gute chemische Verträglichkeit, das Füllmaterial eine hohe Festigkeit und die beiden komplementären Binder eine sehr hohe Bindekraft, wodurch sich dieses Materialsystem besonders für Urformen eignet.

Für Abformurmodelle ist zusätzlich eine ausreichend hohe Temperaturbeständigkeit erforderlich.

Die Erfindung ist unter Beachtung der aufgezeigten Einflußparameter nicht auf das zuvor geschilderte Ausführungsbeispiel beschränkt, sondern vielmehr auf weitere übertragbar und in allen Bereichen des Rapid-Prototyping einsetzbar.

## Patentansprüche

1. Materialsystem zur Verwendung beim 3D-Drucken enthaltend
eine pulverförmige Komponente aus Binder sowie optional Füllmaterial und eine flüssige Komponente aus Lösungsmittel,
wobei der Binder in dem Lösungsmittel löslich ist,
**dadurch gekennzeichnet ,**
**daß** das Materialsystem enthält
zwei komplementäre Polyelektrolythen,
und/oder
einen Initiator für eine Vernetzungsreaktion des Binders.

2. Materialsystem nach Anspruch 1,
wobei die zwei komplementären Polyelektrolyten enthalten sind in zwei Bindern oder
in einem Binder und in dem Lösungsmittel.

3. Materialsystem nach einem der vorhergehenden Ansprüche,
wobei der Initiator, vorzugsweise Photoinitiator, enthalten ist in dem Lösungsmittel oder
in dem oder den Bindern.

4. Materialsystem nach einem der vorhergehenden Ansprüche,
wobei das Füllmaterial mit dem Binder beschichtet ist.

5. Materialsystem nach einem der vorhergehenden Ansprüche,
wobei das Materialsystem restaschearm ist.

6. Materialsystem nach einem der vorhergehenden Ansprüche,
wobei es im Autoklaven fließfähig wird.

7. Materialsystem nach einem der vorhergehenden Ansprüche,
wobei zumindest ein wesentlicher Teil des Füllmaterials und Binders in Form von abgerundeten Partikeln vorliegt.

8. Materialsystem nach Anspruch 7,
wobei der mittlere Partikeldurchmesser kleiner als circa 40 µm ist.

9. Materialsystem nach einem der vorhergehenden Ansprüche,
wobei das Füllmaterial aus Wachs, PS, PMMA oder POM besteht.

10. Materialsystem nach einem der vorhergehenden Ansprüche,
wobei das Füllmaterial aus Metall, Keramik oder Karbid besteht.

11. Materialsystem nach einem der vorhergehenden Ansprüche,
wobei der Binder aus einem wasserlöslichen Polymer besteht,
vorzugsweise aus PVP oder einem seiner Copolymere besteht.

12. Materialsystem nach einem der vorhergehenden Ansprüche,
wobei der Anteil des Binders an dem Materialsystem weniger als 10 Gewichtsprozent beträgt.

## Claims

1. Material system for use in a 3D printing process, containing a powdery component comprising binder and, optionally, filler material and a liquid component comprising solvent, the binder being soluble in the solvent,
**characterized in that**
the material system contains two complementary polyelectrolytes and/or an initiator for a crosslinking reaction of the binder.

2. Material system according to Claim 1, the two complementary polyelectrolytes being contained in two binders or in one binder and in the solvent.

3. Material system according to one of the preceding claims, the initiator, preferably a photoinitiator, being contained in the solvent or in the binder or binders.

4. Material system according to one of the preceding claims, the filler material being coated with the binder.

5. Material system according to one of the preceding claims, the material system being low in residual ash.

6. Material system according to one of the preceding claims, it being free-flowing in the autoclave.

7. Material system according to one of the preceding claims, at least a substantial part of the filler material and binder being present in the form of rounded particles.

8. Material system according to Claim 7, the average particle diameter being less than about 40 µm.

9. Material system according to one of the preceding claims, the filler material consisting of wax, PS, PMMA or POM.

10. Material system according to one of the preceding claims, the filler material consisting of metal, ceramic or carbide.

11. Material system according to one of the preceding claims, the binder consisting of a water-soluble polymer, preferably consisting of PVP or one of its copolymers.

12. Material system according to one of the preceding claims, the proportion of binder in the material system being less than 10% by weight.

## Revendications

1. Système de matériaux pour l'utilisation en impression 3D, contenant un composant en poudre à base de liant et une éventuelle matière de charge et un composant liquide de solvant, le liant étant soluble dans le solvant, **caractérisé en ce que** le système de matériaux contient deux polyélectrolytes complémentaires et/ou un initiateur pour une réaction de réticulation du liant.

2. Système de matériaux selon la revendication 1, dans lequel les deux polyélectrolytes complémentaires sont contenus dans deux liants ou dans un liant et dans le solvant.

3. Système de matériaux selon l'une quelconque des revendications précédentes, dans lequel l'initiateur, de préférence un photoinitiateur, est contenu dans le solvant ou dans le ou les liants.

4. Système de matériaux selon l'une quelconque des revendications précédentes, dans lequel la matière de charge est enrobée du liant.

5. Système de matériaux selon l'une quelconque des revendications précédentes, dans lequel le système de matériaux est pauvre en cendres résiduelles.

6. Système de matériaux selon l'une quelconque des revendications précédentes, lequel est fluide en autoclave.

7. Système de matériaux selon l'une quelconque des revendications précédentes, dans lequel au moins une majeure partie de la matière de charge et du liant se trouve sous la forme de particules arrondies.

8. Système de matériaux selon la revendication 7, dans lequel le diamètre moyen des particules est inférieur à environ 40 µm.

9. Système de matériaux selon l'une quelconque des revendications précédentes, dans lequel la matière de charge consiste en cire, PS, PMMA ou POM.

10. Système de matériaux selon l'une quelconque des revendications précédentes, dans lequel la matière de charge consiste en métal, céramique ou carbure.

11. Système de matériaux selon l'une quelconque des revendications précédentes, dans lequel le liant consiste en un polymère soluble dans l'eau, de préférence de la PVP ou l'un de ses copolymères.

12. Système de matériaux selon l'une quelconque des revendications précédentes, dans lequel la fraction de liant dans le système de matériaux est de moins de 10% en poids.
